# EUROPÄISCHE PATENTSCHRIFT

(11) **EP 0 745 781 B1**
(45) Veröffentlichungstag und Bekanntmachung des Hinweises auf die Patenterteilung: **24.03.2004**
(21) Anmeldenummer: 96108535.4
(22) Anmeldetag: 29.05.1996
(51) Int. Cl.: F16D 65/092, F16D 65/08, F16D 69/00, B29C 45/00

(54) **Verfahren zur Herstellung von Bremsbacken**
Method of making brake pads
Procédé pour fabriquer des plaquettes de frein

(30) Priorität: 02.06.1995 DE 19519940
(43) Veröffentlichungstag der Anmeldung: 04.12.1996
(73) Patentinhaber: TMD Friction GmbH, 51381 Leverkusen (DE)
(72) Erfinder: Ervens, Ludwig, 51519 Odenthal (DE); Wappler, Dieter, 51519 Odenthal (DE)
(74) Vertreter: Dallmeyer, Georg, Dipl.-Ing.

(56) Entgegenhaltungen:
- DE-A- 4 431 642
- GB-A- 1 260 867
- US-A- 3 732 345

## Beschreibung

Die Erfindung betrifft ein Verfahren zur Herstellung eines Bremsbelages oder einer Bremsbacke nach dem Oberbegriff des Anspruchs 1.

Bremsbacken setzen sich üblicherweise aus einem Reibungsteil, das aus einem duroplastischen Reibmaterial besteht und einem Trägerteil aus einem anderen Werkstoff, zumeist Stahl, zusammen.
Die abgewogene Reibmaterialmischung wird zunächst in ein Preßnest gefüllt und kalt vorgepreßt. Anschließend wird der Vorpreßling in eine Heißpreßform eingelegt, fertiggepreßt und gleichzeitig mit einem Trägerteil verklebt. Durch die Verwendung von Vorpreßlingen wird im allgemeinen eine gleichmäßigere Dichteverteilung im gepreßten Körper erreicht.
Zudem ist es üblich das abgewogene Reibmaterial direkt in einer Heißpreßform in einem Arbeitgang zu verpressen.
In der DE-A-28 55 862 wird die Herstellung von Reibbelägen beschrieben, indem das Reibungsteil als auch das Trägerteil aus duroplastischen Materialien unterschiedlicher Art bestehen. Dabei wird in einem ersten Arbeitsschritt das Reibungsteil vorgepreßt und in einem anschließenden Arbeitsgang der Vorpreßling mit dem nicht vorgepreßten Trägermaterial in einer Form fertiggepreßt.
Die Formgebung des Reibungsteils im ersten Arbeitsschritt erfolgt bei geringeren Temperaturen und Drücken als im zweiten Preßvorgang, so daß die Aushärtung gesamthaft im zweiten Preßschritt erfolgt.
Die DE-A-28 32 464 beschreibt ein Verfahren, bei dem ein Vorformling aus duroplastischen Trägerteilmaterial und separat ein Vorformling aus duroplastischen Reibmaterial hergestellt werden und diese in einem dritten Preßprozeß zu einem Belag verbunden und ausgehärtet werden.
In der DE-A-36 17 846 wird ein typisches Herstellverfahren von Scheibenbremsbacken dargestellt bei dem zur Steigerung der Abscherfestigkeit eine Zwischenschicht in Form eines Kleber tragenden Plattenstückes die Haftung zwischen Reibmaterial und der Metallträgerplatte erhöhen soll. Die plattenförmige Zwischenschicht wird mit dem Trägerteil in eine Preßform eingelegt, anschließend wird das granulatförmige Reibmaterial in geforderter Menge eingefüllt, verteilt und verpreßt.

Es ist bekannt (AT 294500 ) eine Scheibenbremsbacke herzustellen , bei der der Belagträger aus einem Stufenabsatz vergrößerten Teil des Reibbelages gebildet wird.
Dieses Tragteil wird zur Steigerung der Festigkeit zusätzlich von einem Rahmen, vorzugsweise einem Stahlband, umgeben.
Das Stahlband soll das Ausbrechen von Halteösen aus dem Trägerteil verhindern. Zur Verstärkung der gesamten Trägerplatte und der Halteösen werden bei Bremsbacken, die eine Kunststoffträgerplatte (DE-A-31 24 527) aufweisen, Verstärkungseinlagen in die Kunststoffträgerpatte eingebettet und im üblichen Preßverfahren hergestellt.
Die Herstellung von Kunststoffträgerelementen mit Verstärkungseinlagen gestaltet sich sich jedoch technisch aufwendig.

Die beschriebenen Herstellungsvarianten haben erhebliche Nachteile. Grundsätzlich ist die Bindung zwischen einem Belag und dem Trägerteil nur mit großem Aufwand befriedigend, d.h. mit ausreichender Abscherfestigkeit, herstellbar, insbesondere vor dem Hintergrund der zunehmenden Belastungen in der Bremse aufgrund der steigenden Fahrzeugleistungen bei konstanten Dimensionen.
Dazu werden die Trägerelemente mit speziellen Klebern beschichtet bzw. chemisch vorbehandelt um gute Haftungseigenschaften zu erhalten. Insbesondere werden Metallträgerplatten aufwendigen Reinigungsverfahren, wie z.B. dem Sandstrahlen unterzogen
Die homogene Verbindung in Form einer einteiligen Bremsbacke, d.h. mit einem Trägerteil und einem Reibbelag aus identischem Material stellt die optimale Bindung der Schnittstelle Belag/Trägerelement dar.
Den Festigkeitswerten insbesondere bezüglich des Trägerelementes aus duroplastischen Werkstoffen sind jedoch mit den gegenwärtigen Herstellungsmethoden Grenzen gesetzt, so daß immer noch in fast allen Fällen Trägerplatten aus Metall, zumeist Stahl, zum Einsatz kommen.
Die Ursache liegt u.a. in den bei den üblichen Preßverfahren im Material auftretenden Lunkern und Blasen, die eine Schwachstelle mit geringer Festigkeit darstellen. Häufig brechen diese Stellen schon bei der Entnahme aus dem Werkzeug ab.

Verursacht wird die Blasen- und Lunkerbildung durch Entgasungsvorgänge unter Hitzeeinfluß bei der Reaktion der Bindemittel. Diese Gase können aus den geschlossenen Formen nicht entweichen und verbleiben im Belag.
Zur Vermeidung der Blasen- und Lunkerbildung werden daher Lüftungszyklen zwischengeschaltet, d.h. die Form wird während des Preßprozesses ein oder mehrere Male kurz geöffnet, so daß die Gase entweichen können. Dies verlängert natürlich die Zykluszeit, d.h. den Herstellprozeß.
Ein weiterer Nachteil der üblichen Preßverfahren sind die Entmischungsvorgänge aufgrund der unterschiedlichen Dichte der Einzelkomponenten des zu verpressenden Materials bei der Handhabung in der Wiegeautomaten und den Zuführeinrichtungen.
Häufig werden zwischen den einzelnen Stationen Mischer zwischengeschaltet.
Dadurch und durch ungleichmäßige Temperaturverteilungen im Werkzeug, u.a. weil die eingefüllte Mischung wesentlich kühler als das Werkzeug ist, entstehen im Material inhomogene Abbindungsgefüge, was die Festigkeit zusätzlich negativ beeinflußt.
Durch die Verwendung von zusätzlichen Versteifungselementen, wie Metallbänder und Verstärkungseinlagen am oder im Trägerteil von einteiligen Belägen soll der Festigkeitsverlust ausgeglichen werden. Dadurch sind jedoch zusätzliche Arbeitgänge notwendig. Allein die Verarbeitung solcher Einlagen gestaltet sich schwierig, solche Backen müssen lackiert oder anderweitig gegen Korrosion geschützt werden, sofern Metallelemente verwendet werden.
Bei den üblichen Preßverfahren geschieht das Abwiegen und Einfüllen der Massen meist von Hand, dabei kommt es zu einer nicht unerheblichen Staubentwicklung. Diese Stäube müssen abgesaugt werden.
Durch die Staubabsaugung, nicht nur im Bereich des Preßnestes sondern auch im Bereich der Wägestation und den beim Füllvorgang in die Preßform danebenfallenden Massen kommt es zusätzlich zu Schwankungen der Zusammensetzung der Massen und der Füllmenge.

Aus der DE-A-44 31 642 ist ein Verfahren bekannt, bei dem zunächst ein Gemisch aus Faserbestandteilen, Bindemitteln, Füllstoffen, sowie Reib- und Abriebmodifikatoren über eine Dosiereinrichtung und einem Schneckenförderer einer Vorform zugeführt werden. In der Vorform wird das Gemisch gleichmäßig mit einem kammartigen Verteiler verteilt und anschließend mit einem Stempel vorgepresst. Der Vorpressling wird in einem Ofen erhitzt und anschließend in einer Form fertiggepresst. Danach erfolgt noch ein Aushärten und eine Schlussbearbeitung.

Der Erfindung liegt die Aufgabe zugrunde, ein Verfahren zur Herstellung von Bremsbelägen oder Bremsbacken zu schaffen, das die Lunker- und Blasenbildung im Fertigungsprozeß wesentlich verringert, ein homogenes Gefüge bei gleichbleibender Qualität bildet, gleichzeitig eine kostengünstige Herstellung von Bremsbelägen oder Bremsbacken ermöglicht und einen Bremsbelag bzw. eine Bremsbacke mit geringem Gewicht schafft.

Die Aufgabe wird erfindungsgemäß durch die Merkmale des Anspruchs 1 gelöst, wobei die Faserbestandteile, wie z.B. Aramidfasern, Bindemittel, wie z.B. Phenolharze, Füllstoffe und Reib- und Abriebmodifikatoren innig vermischt werden, das Gemisch einer beheizten Schneckenspritzeinheit zugeführt, durch eine Förderschnecke homogen gemischt und gleichmäßig erwärmt wird und nach Erreichen der notwendigen Füllmenge im Bereich der Förderschnecke mit Druck in das Werkzeug eingebracht wird und nach teilweisem Abbinden des Bindemittels der Belag aus dem Werkzeug entnommen und getempert wird.

Die mit der Erfindung erzielten Vorteile bestehen insbesondere darin, daß durch das Herstellen einer Mischung und die anschließende Durchmischung und Erwärmung in einer Schneckenspritzeinheit der Entgasungsprozeß, der üblicherweise in der geschlossenen Preßform während des Abbindung erfolgt, vorgezogen wird und die Gase im Schneckenbereich entweichen können.
Vor dem eigentlichen Formgebungsprozeß entweicht somit der größte Teil der flüchtigen Gase, die aus der Reaktion von Hexa und Novolaken entstehen, so daß eine Lunker- und Blasenbildung durch Gasansammlungen im Werkzeug größtenteils ausgeschlossen ist. Die Restreaktionen mit Gasbildungen führen aufgrund der geringen Mengen zu keiner schädlichen Beeinflussung der Materialfestigkeit, insbesondere im Trägerbereich.
Die Erwärmung des Materials im Schneckenbereich bis zur Plastifizierung auf annähernd Werkzeugtemperatur führt vorteilhaft zu einer homogenen Durchmischung des Materials. Entmischungen können dadurch ausgeschlossen werden, so daß ein homogenes Abbindegefüge entsteht. Des weiteren kann dadurch die Porosität im Produkt verringert werden, was einer Festigkeitssteigerung gleichkommt.
Die Füllmenge als auch die Bestandteile der Mischung werden nicht negativ beeinflußt, da die Plastifizierung, Durchmischung und Formgebung in einem geschlossenen System erfolgt.
Es wird die Staubentwicklung und somit die allgemeine Umweltbelastung durch die Herstellung in einem geschlossenen System wesentlich verringert.
Zudem lassen sich durch den Wegfall von bei üblichen Verfahren notwendigen Vorbehandlungen der Trägerelemente oder Verstärkungseinlagen Bremsbeläge wirtschaftlicher herstellen, u.a. auch wegen der besseren Automatisierungsmöglichkeiten. Die Verwendung eines duroplastischen Werkstoffes beim Belagträger und dem Reibungsteil erfüllt zudem die Forderung nach Bremsbacken mit geringeren Gewichten.

Eine bevorzugte Verfahrensweise sieht vor, daß die entsprechende Mischungsmenge im Schneckenbereich in einem Temperaturbereich von 70 - 110 °C plastifiziert und homogen gemischt wird. Diese Temperatur liegt unter der Abbindetemperatur.
Das innig durchmischte Material wird vorzugsweise in ein beheiztes Werkzeug eingebracht, wobei die Werkzeugtemperatur zwischen 125 und 200°C beträgt.
Die entformten Beläge werden vorzugsweise in einem Temperaturbereich von 180 bis 230°C zur vollständigen Aushärtung einem Temperprozeß unterzogen.
Zur Fertigstellung der Beläge werden diese nach der Aushärtung auf Fertigmaß geschliffen.
Eine Steigerung der Wirtschaftlichkeit dieses Verfahrens läßt sich zum einen dadurch erreichen, daß erforderliche Nuten, Durchgangslöcher oder Anformungen direkt im Werkzeug erzeugt werden und zum anderen der Anguß und Gußgrate vor dem Temperprozeß und der damit verbundenen vollständigen Aushärtung entfernt, gemahlen oder granuliert werden und wieder der Mischungsherstellung als teils ausgehärteter Zusatzstoff hinzugefügt werden.
Entsprechende duroplastische Mischungen können vorteilhaft Metallanteile aufweisen.

Die Erfindung wird anhand der in den Zeichnungen dargestellten Beispiele erläutert.

Es zeigen:

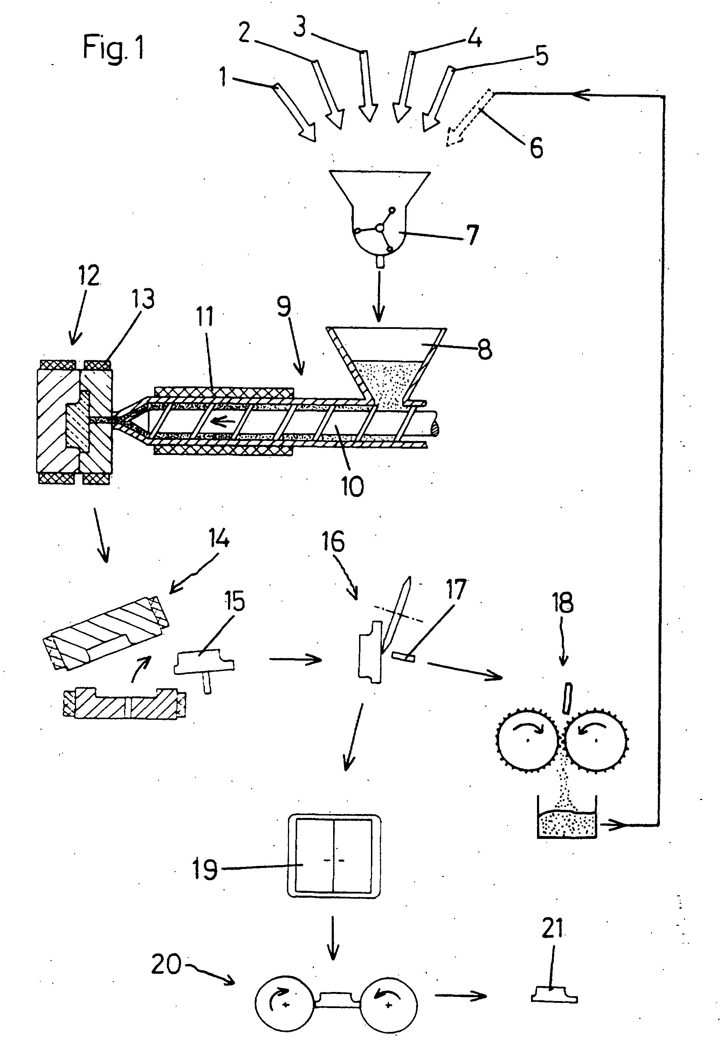

- Fig. 1: eine bildliche Darstellung des Verfahrensablaufes.
- Fig.2: einen Querschnitt durch einen erfindungsgemäß hergestellte Bremsbacke für Scheibenbremsen.
- Fig. 3.: einen Querschnitt durch einen erfindungsgemäß hergestellte Bremsbacke für Trommelbremsen

Das Herstellverfahren von Bremsbacken bzw. Bremsbelägen beginnt mit dem Vermischen der Rohstoffe. Dazu werden Faserbestandteile (1), wie Aramidfasem, wärmehärtbare Bindemittel (2), wie Harze, Füllstoffe (3), wie Schwerspat, Reib- und Abriebmodifikatoren (4), wie Graphit, gegebenenfalls Metallanteile (5), wie Kupferpulver und teils ausgehärtete Zusatzstoffe in einem Mischer (7) innig zu einem Granulat vermischt. Als Mischer (7) kommen Kneter oder Pflugscharmischer zur Anwendung.
Das erstellte Granulat wird in einen Voratsbehälter (8) der Schneckenspritzeinheit (9) gefördert.
In der Schneckenspritzeinheit (9) fördert eine Schnecke (10) die Mischung bis zu einer vorgegebenen Füllmenge , wobei gleichzeitig das Material über die Heizung (11) bis zur Plastifizierung auf ca 100 °C erwärmt und durch die Schnecke (10) homogen gemischt wird. Die entstehenden Gase aus der Reaktion von Hexa und Novolaken entweichen durch den Voratsbehälter (8).
Sobald das Mischungsmaterial in notwendiger Menge durchmischt und plastifiziert ist, wird durch einen Druckstoß der zurückgefahrenen Schnecke das Material unter Druck in das gegebenenfalls bereits vorgefüllte Werkzeug (12) eingebracht. Das Werkzeug (19) wird durch eine Heizung (13) auf Aushärtungstemperatur in Höhe von ca. 150°C gehalten.
Zur Verkürzung der Zykluszeit wird die so geformte Bremsbacke vor der vollständigen Aushärtung entformt (14). Die nun vorliegende Backe (15) mit Anguß wird mittels eines Trenn- oder Schleifverfahrens (16) vom Anguß (17) und Gußgraten befreit.
Der Anguß (17) und die Grate werden anschließend in einer Mühle (18) zu einem trockenen Granulat gemahlen, das als teils ausgehärteter Zusatzstoff (6) der Mischung beigegeben wird.
Die Bremsbacke ohne Anguß wird dann in einem Ofen (19) bei ca. 200°C über mehrere Stunden getempert bis diese vollständig ausgehärtet ist.

Im anschließenden Schleifprozeß (20) wird die Bremsbacke (21) auf das erforderliche Fertigmaß geschliffen.

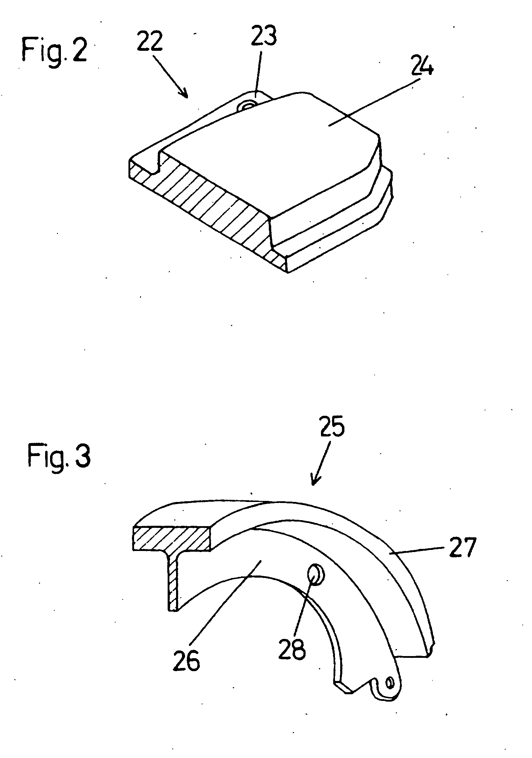

Figur 2 zeigt eine solche Bremsbacke (22), die zum Einbau in eine Scheibenbremse bestimmt ist. Bei dieser besteht das Halteteil (23) und das Reibungsteil (24) aus einem homogenen Material.
Figur 3 zeigt beispielhaft eine nach dem erfindungsgemäßen Verfahren hergestellte Bremsbacke (25) zum Einbau in Trommelbremsen, bei der ebenso das Halteteil (26) und Reibungsteil (27) aus einem homogenen Material gebildet werden. Die Befestigungsöse (28) zum Aufnehmen eines Federendes im eingebauten Zustand in der Bremse wird im Werkzeug durch entsprechende Stifte erzeugt.

## Patentansprüche

1. Verfahren zur Herstellung eines Bremsbelages oder einer Bremsbacke (15,21, 22,25), bei dem
a)
- Faserbestandteile (1),
- Bindemittel (2),
- Füllstoffe (3)
und
- Reib- und Abriebmodifikatoren (4) zu einem Reibmaterialgemisch innig vermischt werden,
**dadurch gekennzeichnet,**
**dass**
b) das Reibmaterialgemisch einer beheizten Schneckenspritzeinheit (9) zugeführt, durch eine Förderschnecke (10) homogen gemischt und gleichmäßig erwärmt wird und nach Erreichen der notwendigen Füllmenge im Bereich der Förderschnecke (10) mit Druck in das Werkzeug (12) eingebracht wird,
c) nach teilweisem Abbinden des Bindemittels (2) die Bremsbacke (15,21,22,25) oder der Bremsbelag aus dem Werkzeug (12) entnommen wird,
d) der Bremsbelag oder die Bremsbacke (15,21,22,25), getempert wird.

2. Verfahren nach Anspruch 1, **dadurch gekennzeichnet, dass** die Bremsbacke aus einem Trägerteil und einem Reibungsteil gebildet wird, wobei der Reibungsteil bei Betätigung der Bremse mit der Bremsscheibe oder Bremstrommel in Eingriff kommt und der Trägerteil über eine Aufnahme die Verbindung zur Bremse herstellt, wobei der Trägerteil und der Reibungsteil aus einem Reibmaterial gebildet werden.

3. Verfahren nach Anspruch 2, **dadurch gekennzeichnet, dass** der Trägerteil und der Reibungsteil aus demselben Reibmaterial gebildet werden.

4. Verfahren nach Anspruch 1, **dadurch gekennzeichnet, dass** der Bremsbelag auf einem Trägerteil der Bremse nachträglich durch einen Klebe- oder/oder Nietvorgang aufgebracht wird.

5. Verfahren nach einem der Ansprüche 1 bis 4, **dadurch gekennzeichnet, dass** das Reibmaterialgemisch im Bereich von 70 bis 110°C in der Schneckenspritzeinheit (9) plastifiziert und homogen gemischt wird.

6. Verfahren nach einem der Ansprüche 1 bis 5, **dadurch gekennzeichnet, dass** das Reibmaterialgemisch in ein beheiztes Werkzeug (12) eingebracht wird.

7. Verfahren nach Anspruch 6, **dadurch gekennzeichnet, dass** die Werkzeugtemperatur zwischen 125 und 200°C beträgt.

8. Verfahren nach Anspruch 1 bis 5, **dadurch gekennzeichnet, dass** nach der Entnahme des Bremsbelages oder der Bremsbacke (15,21,22,25) aus dem Werkzeug (12) Grate und Angüsse entfernt, gemahlen und dem Reibmaterialgemisch als teils ausgehärteter Zusatzstoff zu Wiederverwendung beigemischt wird.

9. Verfahren nach Anspruch 1 bis 8, **dadurch gekennzeichnet, dass** die derart hergestellte Bremsbacke (15,21,22,25) oder Bremsbelag bei einer Temperatur getempert wird, die über der Werkzeugtemperatur liegt, vorzugsweise zwischen 180 und 230°C.

10. Verfahren nach Anspruch 9, **dadurch gekennzeichnet, dass** nach dem Tempern die Bremsbacke (15,21,22,25) oder der Bremsbelag auf Fertigmaß geschliffen wird.

11. Verfahren nach einem der Ansprüche 1 bis 10, **dadurch gekennzeichnet, dass** erforderliche Nuten, Durchgangslöcher und Anformungen im Werkzeug (12) erzeugt werden.

12. Verfahren nach einem der vorhergehenden Ansprüche **dadurch gekennzeichnet, dass** das Reibmaterialgemisch Metallanteile enthält.

## Claims

1. Method for manufacturing a brake lining or a brake jaw (15, 21, 22, 25), wherein
a) fiber components (1),
binding agents (2),
fillers (3)
and
friction and abrasion modifying agents (4) are intimately mixed to form a friction material mixture,
**characterized in that**
b) the friction material mixture is supplied to a heated injection molding screw unit (9), is homogeneously mixed by a feeding screw (10) and is uniformly heated, and, after the necessary fill is reached in the area of the feeding screw (10), is supplied into the tool (12) under pressure,
c) the brake jaw (15, 21, 22, 25) or the brake lining is taken from the tool (12) after the binding agent (2) has partly cured,
d) the brake lining or the brake jaw (15, 21, 22, 25) is annealed.

2. Method of claim 1, wherein the brake jaw is formed by a support member and a friction member, the friction member engaging the brake disk or the brake drum when the brake is operated, and the support member forms the connection to the brake through a receptacle, the support member and the friction member being formed from a friction material.

3. Method of claim 2, wherein the support member and the friction member are formed from the same friction material.

4. Method of claim 1, wherein the brake lining is applied posteriorly on the support member of the brake by adhering and/or riveting.

5. Method of one of claims 1 to 4, wherein the friction material mixture is plasticized and homogeneously mixed in the injection molding screw unit (9) at a temperature ranging from 70 to 110°C.

6. Method of one of claims 1 to 5, wherein the friction material mixture is supplied into a heated tool (12).

7. Method of claim 6, wherein the temperature of the tool is between 125 and 200°C.

8. Method of one of claims 1 to 5, wherein, after removal of the brake lining or the brake jaw (15, 21, 22, 25) from the tool (12), ridges and runners are removed, ground and mixed into the friction material mixture for reuse as a partly cured additive.

9. Method of one of claims 1 to 8, wherein the brake jaw (15, 21, 22, 25) or the brake jaw thus produced is annealed at a temperature higher than the tool temperature, preferably between 180 and 230°C.

10. Method of claim 9, wherein after annealing, the brake jaw (15, 21, 22, 25) or the brake jaw is ground to the final dimensions.

11. Method of one of claims 1 to 10, wherein necessary grooves, through holes and formed parts are produced in the tool (12).

12. Method of one of the preceding claims, wherein the friction material mixture includes a metal content.

## Revendications

1. Procédé de fabrication d'une garniture de frein ou d'un segment de frein (15, 21, 22, 25), dans lequel on mélange intimement
a)
- des ingrédients fibreux (1)
- des liants (2)
- des charges (3)
et
- des modificateurs de friction et d'abrasion (4) pour donner un mélange de matériau de friction,
**caractérisé en ce que**
b) le mélange de matériau de friction est amené à une unité chauffée d'injection à vis sans fin (9), mélangé de façon homogène par une vis de transport sans fin (10) et chauffé de façon uniforme et, après que la quantité de remplissage nécessaire a été atteinte dans la zone de la vis de transport sans fin (10), est introduit sous pression dans le moule (12),
c) après liaison partielle du liant (2) le segment de frein (15, 21, 22, 25) ou la garniture de frein est retiré du moule (12),
d) la garniture de frein ou le segment de frein (15, 21, 22, 25) est soumis à un traitement thermique pour éviter ou réduire les tensions mécaniques.

2. Procédé selon la revendication 1, **caractérisé en ce que** le segment de frein est formé d'une partie de support et d'une partie de friction, la partie de friction venant en prise avec le disque de frein ou le tambour de frein lorsque le frein est actionné et la partie de support réalisant la liaison au frein via un logement, la partie de support et la partie de friction étant constituées d'un matériau de friction.

3. Procédé selon la revendication 2, **caractérisé en ce que** la partie de support et la partie de friction sont constituées du même matériau de friction.

4. Procédé selon la revendication 1, **caractérisé en ce que** la garniture de frein est montée ultérieurement sur une partie de support du frein par un processus de collage et/ou de rivetage.

5. Procédé selon l'une des revendications 1 à 4, **caractérisé en ce que** le mélange de matériau de friction est mélangé de façon homogène et plastifié, dans une plage de 70 à 110°C, dans l'unité d'injection à vis sans fin (9).

6. Procédé selon l'une des revendications 1 à 5, **caractérisé en ce que** le mélange de matériau de friction est introduit dans un moule chauffé (12).

7. Procédé selon la revendication 6, **caractérisé en ce que** la température du moule est comprise entre 125 et 200°C.

8. Procédé selon revendication 1 à 5, **caractérisé en ce que**, après avoir retiré la garniture de frein ou le segment de frein (15, 21, 22, 25) du moule (12), on enlève les culots d'injection et les bavures, on les broie et on les ajoute au mélange de matériau de friction en tant qu'additif partiellement durci pour réutilisation.

9. Procédé selon revendication 1 à 8, **caractérisé en ce que** le segment de frein (15, 21, 22, 25) ou la garniture de frein ainsi réalisé est soumis à un traitement thermique à une température qui est supérieure à la température du moule, de préférence entre 180 et 230°C.

10. Procédé selon la revendication 9, **caractérisé en ce que**, après le traitement thermique, le segment de frein (15, 21, 22, 25) ou la garniture de frein est rectifié à une dimension finale.

11. Procédé selon l'une des revendications 1 à 10, **caractérisé en ce que** des gorges, trous traversants et des parties moulées ajoutées nécessaires sont réalisés dans le moule (12).

12. Procédé selon l'une des revendications précédentes, **caractérisé en ce que** le mélange de matériau de friction contient des ingrédients métalliques.
